# FASCICULE DE BREVET EUROPEEN

(11) **EP 3 870 346 B1**
(45) Date de publication et mention de la délivrance du brevet: **05.07.2023**
(21) Numéro de dépôt: 19786603.1
(22) Date de dépôt: 17.10.2019
(51) Int. Cl.: B01F 23/231, B01F 25/50, B01F 35/53, C02F 3/08

(54) **MODULE DE TRAITEMENT D'EFFLUENTS LIQUIDES**
FLÜSSIGKEITSAUSFLUSSBEHANDLUNGSMODUL
LIQUID EFFLUENT TREATMENT MODULE

(30) Priorité: 22.10.2018 FR 1871266
(43) Date de publication de la demande: 01.09.2021
(73) Titulaire: Meudal, Nicolas, 6005 Luzern (CH)
(72) Inventeur: Meudal, Nicolas, 6005 Luzern (CH)
(74) Mandataire: Vigand, Philippe
(86) Numéro de dépôt international: PCT/EP2019/078242
(87) Numéro de publication internationale: WO 2020/083743

(56) Documents cités:
- US-A- 3 984 322
- US-A- 4 139 457

## Description

La présente invention concerne de manière générale un module de traitement pour effluents liquides, en particulier des effluents liquides industriels ou bien domestiques tels qu'évacués par une salle de bain ou une cuisine.

Ainsi, le traitement des effluents liquides ou eaux usées issus des activités humaines est devenu depuis plusieurs dizaines d'années un sujet de préoccupation pour les autorités et les citoyens. De nombreuses normes et réglementations préviennent désormais le rejet de ces effluents dans l'environnement sans aucun traitement.

Il est connu dans l'art antérieur des dispositifs de traitements des effluents liquides dans lesquels des éléments de garnissage pourvus d'une matière biologique sont maintenus en suspension dans les effluents liquides, de manière à en éliminer des composés polluants. Par exemple, le document US 7 431 833 décrit une cuve en forme de coeur, comprenant deux demi-cuves, dans lesquelles l'alimentation en effluents se fait dans une demi-cuve et la collecte des effluents se fait dans l'autre demi-cuve.

En contrepartie, ce dispositif présente notamment l'inconvénient de nécessiter une cuve de forme complexe, de largeur importante et en particulier de hauteur élevée, de façon à permettre la bonne circulation des effluents liquides au sein de chaque demi-cuve ainsi que d'une demi-cuve à l'autre et/ou nécessite un débit d'injection d'air important synonyme de coût de fonctionnement élevé. En outre, une telle cuve est difficilement fabricable et peut présenter des fragilités, du fait de sa forme spécifique. Ce dispositif est donc coûteux et n'est pas adapté à un dispositif de traitement des effluents transportable, c'est-à-dire pouvant être transporté sous forme assemblée dans un conteneur maritime ou un camion.

Un but de la présente invention est de répondre aux inconvénients du document de l'art antérieur mentionnés ci-dessus et en particulier, tout d'abord, de proposer un dispositif de traitement des effluents liquides qui soit efficace et de fabrication simple, de manière à présenter un coût de fabrication et d'exploitation réduit. Un but additionnel de la présente invention est de proposer un dispositif de traitement des effluents de largeur et surtout de hauteur réduite, de façon à permettre son transport sous forme assemblée, afin de réduire fortement les coûts de transport et de permettre une installation temporaire par exemple lors d'événements ponctuels.

Le document US 3 984 322 A divulgue un module de traitement d'effluents liquides selon le préambule de la revendication 1.

Pour cela, un premier aspect de l'invention concerne un module de traitement d'effluents liquides comprenant au moins une portion de cuve adaptée pour accueillir une pluralité d'éléments de garnissage en suspension pouvant accueillir une matière biologique, la portion de cuve définissant un axe longitudinal horizontal et comprenant au moins une alimentation en effluents, la portion de cuve comprenant en outre :
- au moins une rampe de collecte des effluents traités agencée dans une partie centrale de la portion de cuve et parallèle à l'axe longitudinal horizontal,
- au moins une rampe d'injection d'air agencée dans une partie inférieure de la portion de cuve, de manière excentrée et parallèle à la rampe de collecte des effluents traités,
de telle sorte à provoquer un mouvement en spirale des effluents liquides.

Un tel arrangement, en particulier de la rampe de collecte des effluents traités et de la rampe d'injection d'air, permet de créer et de maintenir un mouvement en spiral des effluents liquides résultant en un traitement efficace des effluents, dans une cuve de largeur et de hauteur minimum et pour un coût énergétique minimum, en particulier grâce à un débit d'injection d'air réduit. De plus, une telle cuve ne nécessite pas de forme complexe coûteuse à fabriquer et fragile lors du transport. Le mouvement en spiral se fait des zones excentrées de la portion de cuve vers la partie centrale de la cuve, c'est-à-dire vers et autour de la rampe de collecte des effluents traités.

La portion de cuve est adaptée pour accueillir des éléments de garnissage en suspension dans les effluents liquides, que ce soit enfermés dans une cage située dans la cuve ou préférentiellement de façon libre avec les effluents liquides. Préférentiellement, la portion de cuve ne comporte ni relief, ni paroi ou élément intérieur pouvant s'opposer au mouvement et notamment à la rotation des éléments de garnissage. Ceci contribue à un traitement efficace des effluents liquides par la matière biologique pourvue sur les éléments de garnissage.

Selon l'invention, l'au moins une alimentation en effluents comprend au moins une rampe d'alimentation en effluents, ce qui permet encore de renforcer le mouvement en spiral des effluents et donc de diminuer la largeur et la hauteur de la cuve tout en limitant la consommation d'énergie durant l'exploitation.

Selon l'invention, la rampe d'alimentation en effluents est agencée de manière parallèle et excentrée par rapport à la rampe d'injection d'air. Ainsi, l'agencement excentré de la rampe d'alimentation en effluents et de la rampe d'injection d'air l'une par rapport à l'autre et par rapport à la rampe de collecte des effluents traités permet un mouvement en spirale optimal des effluents.

Avantageusement, la rampe d'alimentation en effluents est agencée dans une partie supérieure de la portion de cuve, par exemple au-dessus du niveau des effluents dans la cuve, ce qui permet de bénéficier de la force gravitaire et de limiter la puissance de pompage nécessaire pour réaliser l'alimentation en effluents. Dans ce cas, la rampe d'alimentation en effluents peut comprendre des orifices d'alimentation orientés uniquement vers le bas, de façon à créer un courant descendant d'effluents dans la portion de cuve. Alternativement, la rampe d'alimentation en effluents peut être immergée dans la cuve. De plus, la rampe d'alimentation peut être mobile en rotation de façon à orienter les orifices d'alimentation dans une direction optimale par rapport au mouvement en spiral des effluents.

Avantageusement, la rampe d'alimentation en effluents est agencée de manière excentrée par rapport à la rampe d'injection d'air, de manière à renforcer le mouvement en spirale et ainsi limiter la pression et surtout le débit d'injection d'air.

De manière spécialement avantageuse, la rampe de collecte des effluents et la rampe d'alimentation en effluents sont situées de bas en haut sur un plan diagonal de la portion de cuve, ce qui permet un mouvement en spirale optimal dans une cuve de faible largeur et de faible hauteur.

Avantageusement, la rampe de collecte des effluents traités est agencée à mi-chemin entre la rampe d'injection d'air et la rampe d'alimentation en effluents, de manière à permettre un mouvement en spirale des effluents le plus fluide et le plus optimisé possible.

De manière spécialement avantageuse, la portion de cuve comprend une partie inférieure de section incurvée ou biseautée, par exemple constituant la moitié ou le tiers inférieur de la cuve. Une telle section permet ainsi de promouvoir le mouvement en spirale des effluents liquides dans la portion de cuve et de limiter encore sa hauteur et sa largeur et/ou de rigidifier la cuve. Par exemple, la partie inférieure comprend au moins une et préférentiellement une seule ou éventuellement deux génératrices parallèles à l'axe longitudinal horizontal de la cuve, c'est-à-dire que la section incurvée ou biseautée et la rampe de collecte des effluents traités sont orientées selon le même axe longitudinal horizontal de la cuve.

Avantageusement, la portion de cuve et en particulier la partie inférieure comprend un fond et la rampe d'injection d'air est agencée sur ce fond, par exemple fixée sur ce fond ou à proximité de ce fond. Cet agencement est préférable pour maximiser le courant ascendant de bulles d'air créé par la rampe d'injection d'air et donc pour renforcer le mouvement en spirale des effluents tout en limitant la pression et le débit d'injection d'air.

De manière spécialement avantageuse, la portion de cuve comprend une pluralité d'éléments de garnissage ainsi que des effluents liquides et la rampe d'injection d'air et la rampe de collecte des effluents traités sont agencées pour permettre seules le mouvement en spirale des effluents liquides. Ceci évite donc le recours à une agitation mécanique et limite donc la consommation énergétique du module de traitement selon la présente invention. Par exemple, les éléments de garnissage sont pourvus d'une matière biologique adaptée pour traiter, c'est-à-dire purifier, nettoyer ou dépolluer les effluents liquides introduits dans la cuve ou la portion de cuve, par exemple par un procédé biologique aérobie.

Avantageusement, la cuve est formée par deux portions de cuves pouvant être séparées par un plan de symétrie vertical. En outre, l'au moins une rampe d'injection d'air peut être disposée dans le plan de symétrie verticale, ceci afin d'optimiser le débit de traitement des effluents. Par exemple, une seule rampe d'injection d'air est utilisée pour les deux portions de cuve, ce qui limite les coûts de fabrication du module de traitement des effluents selon la présente invention. Alternativement, une ou plusieurs rampes d'injection d'air peuvent être disposées dans chaque portion de cuve, par exemple dans le cas d'effluents liquides visqueux ou nécessitant un fort débit d'injection d'air. En outre, une seule rampe d'alimentation peut être utilisée pour les deux portions de cuve.

Par exemple, la partie centrale d'une portion de cuve est agencée à mi-distance entre le plan de symétrie et une cloison latérale de la cuve et/ou à mi-hauteur de la cuve.

Avantageusement, la cuve formée des deux portions de cuve symétriques comprend une partie inférieure de section incurvée ou trapézoïdale. Par exemple, la section incurvée a un seul rayon de courbure et la section trapézoïdale a sa plus petite largeur vers le bas, c'est-à-dire servant de fond. Ceci permet de limiter les coûts de fabrication du présent module de traitement tout en autorisant une haute efficacité de traitement des effluents.

Par exemple, la cuve ou la portion de cuve comprend un capot supérieur étanche de manière à améliorer l'efficacité du traitement des effluents liquides et/ou un dispositif de collecte de gaz de façon à limiter les émissions gazeuses dans l'environnement et/ou valoriser ces émissions gazeuses.

De manière spécialement avantageuse, la cuve ou la portion de cuve présente une hauteur inférieure à 3 m, par exemple de 1,5 m à 3 m et préférentiellement de 2 m à 3 m. Ceci permet au module de traitement des effluents d'être transporté et livré tout assemblé par voie routière et/ou maritime, par exemple dans un conteneur maritime standard. En outre, la largeur de la cuve, transversale à son axe longitudinal peut être inférieure à 3,05 m, par exemple de 1,5 m à 3 m préférentiellement de 2,3 m à 3 m. De telles dimensions réduites sont rendues possibles par l'arrangement spécifique du présent module de traitement.

Un second aspect de l'invention est un système de traitement d'effluent liquide comportant au moins un module de traitement selon le premier aspect de l'invention ainsi que des dispositifs motorisés d'alimentation en effluents et d'injection d'air. Par exemple, il peut s'agir de moyens de pompage et de moyens de compression d'air. En outre, des moyens de pompage peuvent assister la collecte des effluents traités.

Un troisième aspect de l'invention est un procédé de traitement d'effluents liquides utilisant un module de traitement selon le premier aspect de l'invention ou un système de traitement selon le deuxième aspect de l'invention, ledit procédé comprenant les étapes consistant à :
- pourvoir une pluralité d'éléments de garnissage accueillant une matière biologique dans une cuve ou une portion de cuve,
- alimenter la portion de cuve en effluents liquides à traiter par l'alimentation en effluents,
- injecter de l'air par la rampe d'injection d'air de manière à créer un mouvement des effluents liquides en forme de spirale,
- collecter les effluents traités par la rampe de collecte des effluents traités, agencée au centre du mouvement en spirale et/ou dans une partie centrale de la cuve ou de la portion de cuve.

Un tel procédé permet un mouvement en spirale optimal des effluents dans une cuve de hauteur limitée et avec une pression d'injection d'air et surtout un débit d'air limité. Préférentiellement, les éléments de garnissage sont adaptés pour être en suspension dans les effluents liquides. Par exemple, ils comprennent une densité entre 0.8 et 1.2 et préférentiellement d'environ 1.

De manière avantageuse, le présent procédé comprend une étape consistant à réintroduire une partie des effluents collectés dans la cuve par la rampe d'alimentation en effluents.

Préférentiellement, aucun média filtrant de type sable, gravier ou pierre n'est présent dans la cuve ou portion de cuve de façon à ne pas entraver la circulation des éléments de garnissage et/ou des effluents liquides.

Aussi décrit est un module de traitement d'effluents liquides comprenant une portion de cuve adaptée pour accueillir une pluralité d'éléments de garnissage pouvant accueillir une matière biologique, la portion de cuve comprenant au moins une alimentation en effluents,
dans lequel la portion de cuve est adaptée pour permettre un mouvement en spirale des effluents liquides et comprend pour ce faire :
- au moins une rampe de collecte des effluents traités agencée pour être située dans une partie centrale du mouvement en spirale,
- au moins une rampe d'injection d'air agencée pour être située dans une partie extérieure du mouvement en spirale, par exemple dans une partie inférieure de la portion de cuve et/ou du mouvement en spiral.

En outre, l'alimentation en effluents peut être une rampe d'alimentation en effluents agencée dans une partie extérieure du mouvement en spiral, par exemple dans une partie supérieure de la portion de cuve. De plus, la rampe d'alimentation en effluents peut être agencée pour créer dans la portion de cuve un courant d'alimentation en effluents dans le sens du mouvement en spirale, c'est-à-dire renforçant ce mouvement.

Aussi décrit est un module de traitement d'effluents liquides comprenant une cuve adaptée pour accueillir une pluralité d'éléments de garnissage pouvant accueillir une matière biologique et présentant un axe longitudinal, par exemple horizontal, ainsi qu'une paroi et un fond, la cuve comprenant :
- un plan de symétrie définissant au moins deux portions de cuve symétriques l'une à l'autre,
   - au moins une rampe d'injection d'air disposée sur le fond et sur le plan de symétrie de la cuve, par exemple une seule rampe d'injection d'air,
   - au moins une rampe de collecte des effluents traités agencée pour être située dans une partie centrale de la portion de cuve,
   - au moins une rampe d'alimentation en effluents agencée dans la cuve, par exemple à proximité de la paroi de la cuve et/ou dans une partie supérieure de la cuve.

Préférentiellement, une rampe d'alimentation en effluents est située dans chaque portion de cuve.

Enfin, les deuxième, troisième, quatrième et cinquième aspects peuvent comprendre toutes les caractéristiques avantageuses du premier aspect de l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue de trois quarts en coupe d'un module de traitement des effluents selon la présente invention,
- la figure 2 représente une vue de dessus du module de traitement des effluents selon la figure 1,
- la figure 3 représente une vue en coupe de face du module de traitements des effluents selon les figures 1 et 2,
- la figure 4 représente un autre module de traitement des effluents selon la présente invention.

La présente invention concerne un module de traitement d'effluents liquide permettant d'accueillir des éléments de garnissage contenant ou supportant une matière biologique permettant un traitement ou une dépollution des effluents liquides. Préférentiellement, ce module de traitement des effluents liquides est transportable par voie maritime et/ou routière, c'est-à-dire que ses dimensions et en particulier sa hauteur sont suffisamment réduites pour qu'il soit placé sous forme assemblée dans un conteneur standard.

En outre, le module de traitement d'effluents liquides selon la présente invention peut être connecté avec d'autres modules de services et/ou de traitement des effluents liquides de manière à constituer une station de traitement d'effluents liquides. Par exemple, ces modules peuvent être des modules de pompage, de pilotage et d'analyse ou bien des modules de stockage d'effluent ou encore de traitement physique, chimique ou biologique, comme connu de l'homme du métier.

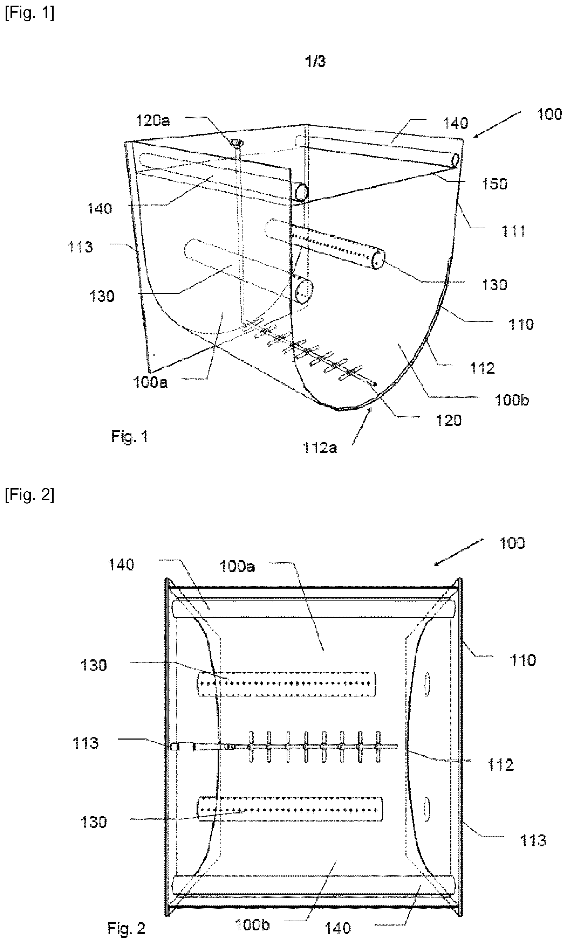

Les figures 1 à 3 représentent un module de traitement 100 d'effluents liquides selon un premier mode de réalisation. Ce module de traitement 100 comprend une cuve 110 destinée à accueillir des effluents liquides à traiter, par exemple des eaux usées domestiques et industrielles ne pouvant pas être rejetées telles quelles dans l'environnement. En outre, la cuve 110 peut être adaptée pour accueillir des éléments de garnissage mobiles en suspension, préférentiellement de façon à permettre leur libre circulation et rotation dans la cuve sans présence de parois, d'éléments intérieurs ou encore de reliefs conduisant à empêcher ou limiter le mouvement de ces éléments de garnissage ou des effluents liquides. Par exemple, les éléments de garnissage sont en en matière plastique, en composite ou en matière organique et peuvent accueillir une matière biologique et notamment des microorganismes permettant de traiter ou d'assainir les effluents liquides contenus dans la cuve 110.

La cuve 110 est pourvue d'un plan de symétrie central vertical (non représenté) définissant deux demi-cuves ou portions de cuve 110a et 110b et sur lequel se trouve un tuyau d'alimentation d'air 120a, comme détaillé ci-après. La cuve 110a une section en forme de U, comprenant une partie supérieure 111 délimitée par de parois substantiellement parallèles et verticales et une partie inférieure 112 de section incurvée, c'est-à-dire comprenant un ou éventuellement plusieurs rayons de courbure. La partie inférieure 112 définit un fond 112a qui est par exemple une zone de la partie inférieure 112 où la cuve 110a une hauteur la plus importante. Par exemple, la paroi incurvée de la partie inférieure 112 peut être constituée d'éléments plats et longilignes disposés les uns à côté des autres de façon à définir ensemble un rayon de courbure, comme représentés sur la Figure 1.

La cuve 110 comprend un axe longitudinal horizontal ainsi que deux extrémités de part et d'autre de la section en forme de U, fermées chacune par une plaque verticale 113. Ainsi chaque portion de cuve 110a et 110b comprend une moitié de la partie inférieure 112, une moitié de la partie supérieure 111 et deux moitiés de plaques verticales 113. Préférentiellement, les parois de la cuve sont formées d'un matériau plein et étanche, comme de l'acier inoxydable, de l'aluminium, une matière plastique ou un composite.

En outre, la cuve 110 accueille dans sa partie inférieure 112 une rampe d'injection d'air 120 située par exemple sur le plan de symétrie vertical et entre les portions de cuve 110a et 110b. Ainsi, la rampe d'injection d'air 120 peut être posée ou placée à proximité du fond 112a et peut être surmontée par la plus grande colonne de liquide existant dans la cuve 110. Cette rampe d'injection d'air 120 est reliée par le tuyau d'alimentation en air 120a à un système d'injection d'air comprenant par exemple un compresseur (non représenté) et fournissant une pression d'air supérieure à la pression de la colonne de liquide s'appliquant sur la rampe d'injection d'air 120, de manière à réaliser une injection d'air dans la partie inférieure 112 sous forme de bulles d'air, comme connu de l'homme du métier.

De plus, sur les figures 1 à 3, la cuve 110 comprend deux rampes de collecte des effluents traités 130 parallèles à l'axe longitudinal de la cuve et faisant préférentiellement protrusion d'une des parois ou plaques verticales 113 et situées dans une partie centrale de chacune des portions de cuves 110a et 110b, par exemple à mi-hauteur de la cuve 110 et/ou entre la partie supérieure 111 et la partie inférieure 112. Ainsi, les rampes de collecte des effluents traités sont situées dans un plan horizontal entre le sommet de la cuve 110 et le fond 112a ou bien entre le niveau des effluents 150 contenus dans la cuve 110 et la rampe d'injection d'air 120.

En outre, les rampes de collecte des effluents traités 130 peuvent être situées chacune à mi-chemin entre une paroi verticale de la cuve 110 et le plan de symétrie vertical. Autrement dit, chaque rampe de collecte des effluents traités 130 peut occuper une partie centrale du volume de chaque portion de cuve 110a, 110b, par exemple sur l'axe longitudinal horizontal passant par l'isobarycentre de chaque portion de cuve.

Ces rampes de collecte des effluents traités 130 sont destinées à collecter et évacuer les effluents liquides traités et sont reliées de manière hydraulique à un autre élément de traitement des effluents liquides ou bien à un dispositif d'évacuation et/ou de stockage des effluents liquides traités (non représenté).

Enfin, chaque portion de cuve 110a et 110b comprend une rampe d'alimentation en effluents 140 s'étendant à partir d'une des plaques verticales 113, dans la partie supérieure 111 de la cuve 110, par exemple dans un plan horizontal au sommet de la cuve 110, préférentiellement au-dessus du niveau d'effluents 150 dans la cuve 110. La rampe d'alimentation en effluents est également excentrée par rapport à la rampe d'injection d'air 120 et se situe à proximité d'une paroi de la cuve 110, parallèlement à l'axe longitudinal de la cuve 110.

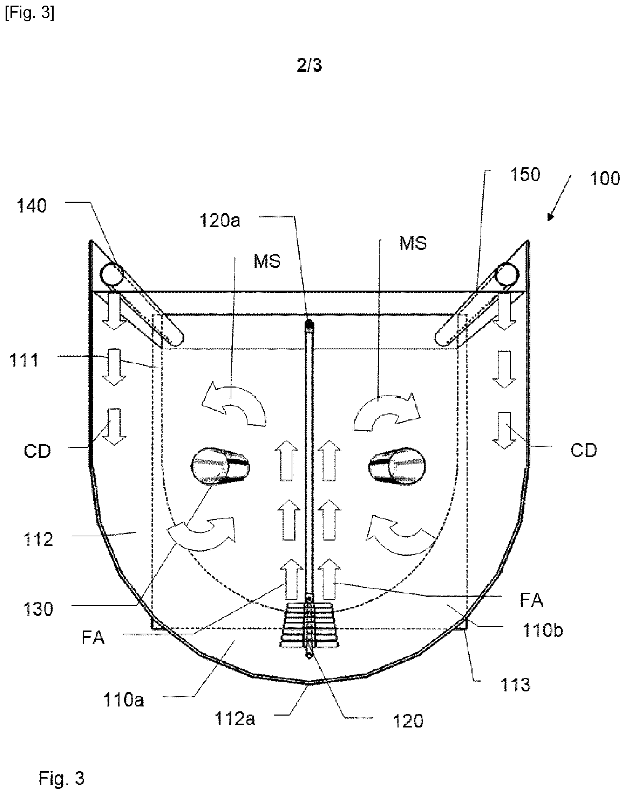

Ainsi, la rampe d'injection d'air 120, la rampe de collecte des effluents traités 130 et la rampe d'alimentation en effluents 140 peuvent être situées de bas en haut sur un plan diagonal de chaque portion de cuve 110a, 110b. De plus, la rampe de collecte des effluents traités 130 peut être située à mi-distance entre la rampe d'injection d'air 120 et la rampe d'alimentation en effluents 140 (voir figure 3).

Les rampes d'alimentation en effluents 140 sont reliées par exemple à une pompe d'alimentation en effluents et/ou à une cuve de stockage d'effluents (non représentées). Ces rampes d'alimentation en effluents 140 sont destinées à alimenter, par exemple en continu, la cuve 110 en effluents liquides à traiter, de manière à maintenir un niveau d'effluents 150 approximativement constant dans la cuve 110. Ainsi, le débit d'alimentation peut être substantiellement égal au débit d'évacuation des effluents.

Les rampes utilisées pour l'alimentation et l'évacuation des effluents sont des éléments cylindriques perforés et/ou grillagés s'étendant sur une majeure partie de la longueur de la cuve 110, par exemple sur une longueur supérieure ou égale à la moitié ou les trois quarts de la longueur de la cuve ou encore sur toute la longueur de la cuve. Par exemple, les rampes d'alimentation 140 des figures 1-3 sont perforées avec des orifices orientés uniquement vers le bas ou au moins situés dans la partie inférieure des rampes d'alimentation, ce qui permet de contribuer au mouvement en spirale des effluents traités.

En outre, la rampe d'injection d'air 120 peut être munie de tubes transversaux perforés, afin d'assurer un débit et une répartition optimale de l'air injecté. Alternativement, d'autres éléments connus de l'homme du métier peuvent être utilisés, comme des éléments grillagés longitudinaux, notamment pour les rampes de collecte des effluents traités 130.

La figure 3 représente une cuve 110 de traitement d'effluents liquides en fonctionnement. Elle est ainsi pourvue de la rampe d'injection d'air 120 posée sur le fond 112a en son centre ou sur un plan de symétrie vertical, du tuyau d'alimentation en air 120a vertical et situé sur le plan de symétrie vertical. Elle comprend en outre les deux rampes de collecte des effluents traités 130 dans un plan horizontal médian et les deux rampes d'alimentation en effluents 140 dans la partie supérieure 111 de la cuve 110, par exemple à son sommet. Ainsi, dans le mode de réalisation des figures 1-3, une seule rampe d'injection d'air 120 sert pour chacune des portions de cuve 110a et 110b. Alternativement, une ou plusieurs rampes d'injection d'air peuvent être pourvues dans chacune des portions de cuves.

De plus, dans chaque portion de cuve 110a, 110b, une rampe de collecte des effluents traités 130 est située dans une partie centrale de la portion de cuve alors que la rampe d'injection d'air 120 est décentrée ou excentrée par rapport à cette partie centrale et située dans la partie inférieure 112. Par exemple, la rampe d'injection d'air 120 est décalée à la fois sur un axe transversal et sur un axe vertical, par rapport à chacune des rampes de collecte des effluents traités 130, mais est parallèle et/ou alignée sur le même axe longitudinal horizontal.

En fonctionnement, dans chaque portion de cuve 110a et 110b, la rampe d'injection d'air 120 crée un flux de bulles d'air ascendant FA à partir du fond 112a de la cuve 110, ce qui entraîne un flux ascendant des effluents dans chacune des portions de cuve 110a, 110b. Du fait de la rampe de collecte des effluents traités 130 située dans la partie centrale de la portion de cuve 110a, 110b, un mouvement spiral MS des effluents liquides est créé, ce qui permet un mouvement optimal des éléments de garnissage et donc un traitement optimisé des effluents liquides dans une largeur restreinte et en particulier dans une hauteur de cuve limitée. De plus, aucune agitation mécanique n'est nécessaire, ce qui limite le coût du module de traitement selon la présente invention ainsi que la consommation d'énergie durant son fonctionnement. Dans le mode de réalisation des figures 1 à 3, deux mouvements en spirale des effluents liquides ont lieu durant le fonctionnement, un dans chaque portion de cuve 110a, 110b.

En outre, les rampes d'alimentation en effluents 140 créent dans chaque portion de cuve 110a, 110b un courant descendant CD d'effluents liquides à traiter le long des parois de la cuve 110 qui permet de renforcer ce mouvement en spiral MS des effluents et donc le brassage des éléments de garnissage. L'efficacité du traitement des effluents dans le module de traitement selon la présente invention est donc renforcée et le débit d'injection d'air peut être limité, limitant ainsi la consommation énergétique.

Ainsi, la cuve 110 du présent module de traitement 100 peut être vue comme comprenant deux portions de cuves 110a, 110b adaptée chacune pour permettre un mouvement en spirale des éléments de garnissage et des effluents liquides et comprenant pour se faire deux rampes de collecte des effluents traités 130 agencée chacune dans une partie centrale du mouvement en spiral des effluents liquides ainsi que la rampe d'injection d'air 120 agencée dans une partie extérieure ou excentrée du ou des mouvements en spiral, par exemple dans la partie inférieure 112 de la portion de cuve 110a, 110b, c'est-à-dire en dessous de la rampe de collecte des effluents traités 130.

Le positionnement spécifique de la rampe de collecte des effluents traités 130 de chaque portion de cuve 110a, 110b par rapport à la rampe d'injection d'air 120 permet ainsi de créer un mouvement en spirale des effluents contenus dans la cuve afin d'obtenir un traitement optimal des effluents dans une cuve de largeur réduite et surtout de hauteur minimale. Un module de traitements des effluents liquides comprenant une telle cuve peut donc être facilement transporté sous forme assemblée pour être installée facilement de manière définitive ou provisoire loin de son lieu de fabrication.

La rampe d'alimentation en effluents 140 de chaque portion de cuve 110a, 110b est préférentiellement située dans une partie excentrée ou extérieure par rapport au mouvement en spirale des effluents, par exemple dans la partie supérieure 111 de la cuve 110, ce qui peut contribuer à la création et au maintien du mouvement en spirale des effluents dans une cuve de hauteur minimale sans un débit d'air important et donc avec une consommation d'énergie limitée.

Dans le mode de réalisation des figures 1 à 3, la rampe d'injection d'air 120 est unique et comprend un segment central longitudinal ainsi que des segments transversaux plus courts. Cependant, la rampe d'injection d'air peut prendre une forme alternative comme expliqué ci-après.

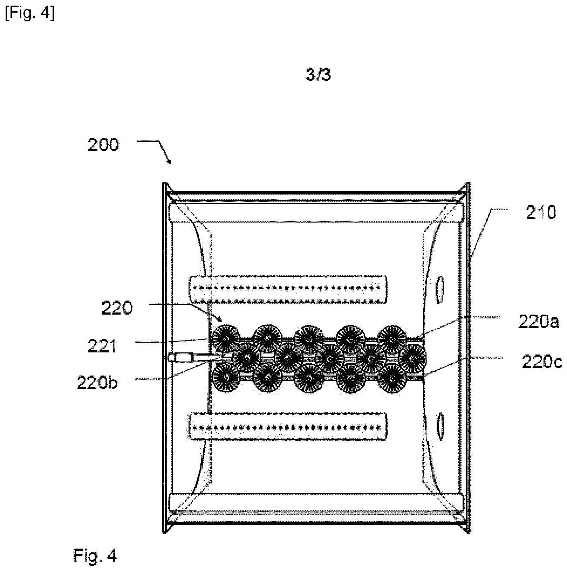

Ainsi, dans le mode de réalisation de la figure 4, un module de traitement d'effluents liquides 200 est identique au module de traitement 100 d'effluents liquides selon les figures 1 à 3, à l'exception de la rampe d'injection d'air 220. Celle-ci comprend en effet trois segments longitudinaux 220a, 220b, 220c pourvus chacun de disques perforés d'injection d'air 221. Ces disques perforés d'injection d'air 221 permettent une répartition des bulles d'air dans un volume important et peuvent donc être préférables pour certains volumes de cuve, certains types de cuves ou bien certains types d'effluents liquides à traiter.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence à la rampe d'injection d'air 120 qui peut prendre toute forme adaptée, autre que les formes représentées sur les présentes figures. En outre, la rampe d'injection d'air 120 peut s'étendre sur une partie ou sur toute la longueur de la cuve 110 et à distance ou à proximité d'une paroi de la cuve ou de la portion de cuve.

De même, les rampes de collecte des effluents traités 130 peuvent s'étendre sur une partie ou toute la longueur de la cuve 110 et peuvent avoir une portion terminale ouverte dans leur extrémité orientée dans la cuve ou portion de cuve, comme dans les présentes figures, ou bien préférentiellement fermée. Par exemple, la portion terminale est fermée par un tube en T permettant de recueillir les effluents traités d'un ou plusieurs autres modules similaires adjacents.

Dans le cas où plusieurs modules de traitement d'effluents liquides selon la présente invention sont connectés en série, la portion terminale peut être fermée par un tube en T, une première branche horizontale du T pouvant donc être reliée à la rampe de collecte des effluents du module de traitement. Une deuxième branche horizontale du T peut être reliée au travers de la paroi verticale de la portion de cuve à la rampe de collecte des effluents d'un autre module de traitement adjacent. Enfin, la branche verticale du T peut être ouverte et orientée par exemple vers le haut ou vers le bas de la portion de cuve du module de traitement. Ainsi, grâce à un manchon en T, les effluents traités collectés d'un autre module de traitement adjacent peuvent être réinjectés au moins partiellement dans la portion de cuve du module de traitement, ce qui permet d'améliorer le traitement des effluents et donc la qualité des effluents collectés après traitement.

Les rampes d'alimentation en effluents 140 ont préférentiellement une extrémité ouverte et peuvent s'étendre également sur une partie ou toute la longueur de la cuve 110. En outre, elles peuvent être agencées à proximité ou à distance d'une paroi de la cuve 110 ou de la portion de cuve. Elles peuvent aussi être agencées sous le niveau des effluents liquides notamment si elles sont couplées à des moyens de pompage permettant de vaincre la pression des effluents liquides. Elles comportent préférentiellement des orifices orientés vers le bas, c'est-à-dire vers la partie inférieure de la portion de cuve.

Enfin, la cuve 110 n'est pas limitée à une section en U, mais peut avoir une autre forme ou une autre section, par exemple une partie inférieure de forme biseautée ou un fond plat et/ou une partie supérieure arrondie ou incurvée. La cuve 110 peut être munie d'un capot supérieur non représenté pouvant être étanche, de manière à améliorer l'efficacité de la réaction biologique de traitement des effluents. Ce capot peut être éventuellement pourvu d'un dispositif de collecte des gaz, de manière à limiter les odeurs générées par le module de traitement durant son fonctionnement et/ou à valoriser les gaz formés.

## Revendications

1. Module de traitement (100) d'effluents liquides comprenant au moins une portion de cuve (110a, 110b) adaptée pour accueillir une pluralité d'éléments de garnissage en suspension pouvant accueillir une matière biologique, la portion de cuve (110a, 110b) définissant un axe longitudinal horizontal et comprenant au moins une alimentation en effluents,
la portion de cuve (110a, 110b) comprenant en outre :
• au moins une rampe de collecte des effluents traités (130) agencée dans une partie centrale de la portion de cuve et parallèle à l'axe longitudinal horizontal,
• au moins une rampe d'injection d'air (120) agencée dans une partie inférieure (112) de la portion de cuve, de manière excentrée et parallèle à la rampe de collecte des effluents traités (130),
de telle sorte à provoquer un mouvement en spirale des effluents liquides,
**caractérisé en ce que** l'au moins une alimentation en effluents comprend au moins une rampe d'alimentation en effluents (140) parallèle et excentrée par rapport à la rampe de collecte des effluents traités (130).

2. Module de traitement (100) selon la revendication précédente, **caractérisée en ce que** la rampe d'alimentation en effluents (140) est agencée dans une partie supérieure (111) de la portion de cuve (110a, 110b).

3. Module de traitement (100) selon la revendication précédente, **caractérisée en ce que** la rampe d'alimentation en effluents (140) est agencée de manière excentrée par rapport à la rampe d'injection d'air (120).

4. Module de traitement (100) selon l'une des revendications 1 à 3, **caractérisé en ce que** la rampe d'injection d'air, la rampe de collecte des effluents et la rampe d'alimentation en effluents sont situées de bas en haut sur un plan diagonal de la portion de cuve (110a, 110b).

5. Module de traitement (100) selon l'une des revendications 1 à 4, **caractérisé en ce que** la rampe de collecte des effluents traités (130) est agencée à mi-chemin entre la rampe d'injection d'air (120) et la rampe d'alimentation en effluents (140).

6. Module de traitement (100) selon l'une des revendications précédentes, **caractérisé en ce que** la portion de cuve (110a, 110b) comprend une partie inférieure (112) de section incurvée ou biseautée.

7. Module de traitement (100) selon la revendication précédente, dans lequel la partie inférieure (112) comprend une génératrice parallèle à l'axe longitudinal horizontal de la portion de cuve (110a, 110b).

8. Module de traitement (100) selon l'une quelconque des revendications précédentes, **caractérisé en ce que** la portion de cuve (110a, 110b) comprend un fond (112a) et **en ce que** la rampe d'injection d'air (120) est agencée sur ce fond (112a).

9. Module de traitement (100) selon l'une quelconque des revendications précédentes, **caractérisé en ce que** la portion de cuve (110a, 110b) comprend une pluralité d'éléments de garnissage ainsi que des effluents liquides, **caractérisé en ce que** la rampe d'injection d'air (120) et la rampe de collecte des effluents traités (130) sont agencées pour permettre seules le mouvement en spirale des effluents liquides.

10. Module de traitement (100) selon l'une quelconque des revendications précédentes, dans lequel une cuve (110) est formée par deux portions de cuve (110a, 110b) séparées par un plan de symétrie vertical et comprend l'au moins une rampe d'injection d'air (120) disposée dans le plan de symétrie verticale.

11. Module de traitement selon l'une quelconque des revendications précédentes, **caractérisé en ce que** la portion de cuve comprend un capot supérieur étanche ainsi qu'un dispositif de collecte de gaz.

12. Module de traitement (100) selon l'une quelconque des revendications précédentes, **caractérisé en ce que** la portion de cuve (110a, 110b) présente une hauteur inférieure à 3,05m, par exemple de 2 m à 3 m.

13. Système de traitement d'effluent liquide comportant au moins un module de traitement (100) selon l'une quelconque des revendications précédentes ainsi que des dispositifs motorisés d'alimentation en effluents et d'injection d'air.

14. Procédé de traitement d'effluents liquides utilisant un module de traitement selon l'une des revendications 1 à 12, ledit procédé comprenant les étapes consistant à :
- pourvoir une pluralité d'éléments de garnissage accueillant une matière biologique dans une portion de cuve (110a, 110b)
- alimenter la portion de cuve (110a, 110b) en effluents liquides à traiter par l'alimentation en effluents,
- injecter de l'air par la rampe d'injection d'air (120) de manière à créer un mouvement des effluents liquides en forme de spirale,
- collecter les effluents traités par la rampe de collecte des effluents traités (130), agencée dans la partie centrale de la portion de cuve (110a, 110b).

## Patentansprüche

1. Flüssigkeitsausfluss-Behandlungsmodul (100), umfassend mindestens einen Behälterabschnitt (110a, 110b), der zum Empfang einer Vielzahl schwebender Einsatzelemente geeignet ist, die ein biologisches Material empfangen können, wobei der Behälterabschnitt (110a, 110b) eine horizontale Längsachse definiert und mindestens eine Versorgung mit Ausflüssen umfasst,
wobei der Behälterabschnitt (110a, 110b) ferner umfasst:
• mindestens ein Rohr zum Sammeln der behandelten Ausflüsse (130), das in einem zentralen Teil des Behälterabschnitts und parallel zur horizontalen Längsachse eingerichtet ist,
• mindestens ein Rohr zum Einleiten von Luft (120), das in einem unteren Teil (112) des Behälterabschnitts außermittig und parallel zum Rohr zum Sammeln der behandelten Ausflüsse (130) eingerichtet ist,
so dass eine Spiralbewegung der flüssigen Ausflüsse hervorgerufen wird,
**dadurch gekennzeichnet, dass** die mindestens eine Versorgung mit Ausflüssen mindestens ein zum Rohr zum Sammeln der behandelten Ausflüsse (130) paralleles und außermittiges Rohr zur Versorgung mit Ausflüssen (140) umfasst.

2. Behandlungsmodul (100) nach vorangehendem Anspruch, **dadurch gekennzeichnet, dass** das Rohr zur Versorgung mit Ausflüssen (140) in einem oberen Teil (111) des Behälterabschnitts (110a, 110b) eingerichtet ist.

3. Behandlungsmodul (100) nach vorangehendem Anspruch, **dadurch gekennzeichnet, dass** das Rohr zur Versorgung mit Ausflüssen (140) im Verhältnis zum Rohr zum Einleiten von Luft (120) außermittig eingerichtet ist.

4. Behandlungsmodul (100) nach einem der Ansprüche 1 bis 3, **dadurch gekennzeichnet, dass** sich das Rohr zum Einleiten von Luft, das Rohr zum Sammeln von Ausflüssen und das Rohr zur Versorgung mit Ausflüssen von unten nach oben auf einer diagonalen Ebene des Behälterabschnitts (110a, 110b) befinden.

5. Behandlungsmodul (100) nach einem der Ansprüche 1 bis 4, **dadurch gekennzeichnet, dass** das Rohr zum Sammeln der behandelten Ausflüsse (130) auf halbem Weg zwischen dem Rohr zum Einleiten von Luft (120) und dem Rohr zur Versorgung mit Ausflüssen (140) eingerichtet ist.

6. Behandlungsmodul (100) nach einem der vorangehenden Ansprüche, **dadurch gekennzeichnet, dass** der Behälterabschnitt (110a, 110b) einen unteren Teil (112) mit gekrümmtem oder abgeschrägtem Querschnitt umfasst.

7. Behandlungsmodul (100) nach vorangehendem Anspruch, wobei der untere Teil (112) eine zur horizontalen Längsachse des Behälterabschnitts (110a, 110b) parallele Mantellinie umfasst.

8. Behandlungsmodul (100) nach einem der vorangehenden Ansprüche, **dadurch gekennzeichnet, dass** der Behälterabschnitt (110a, 110b) einen Boden (112a) umfasst und dass das Rohr zum Einleiten von Luft (120) auf diesem Boden (112a) eingerichtet ist.

9. Behandlungsmodul (100) nach einem der vorangehenden Ansprüche, **dadurch gekennzeichnet, dass** der Behälterabschnitt (110a, 110b) eine Vielzahl von Einsatzelementen sowie des flüssigen Ausflüsse umfasst, **dadurch gekennzeichnet, dass** das Rohr zum Einleiten von Luft (120) und das Rohr zum Sammeln der behandelten Ausflüsse (130) eingerichtet sind, um allein die Spiralbewegung der flüssigen Ausflüsse zu gestatten.

10. Behandlungsmodul (100) nach einem der vorangehenden Ansprüche, wobei ein Behälter (110) von zwei durch eine vertikale Symmetrieebene getrennten Behälterabschnitten (110a, 110b) gebildet ist und das mindestens eine Rohr zum Einleiten von Luft (120) umfasst, das in der vertikalen Symmetrieebene angeordnet ist.

11. Behandlungsmodul nach einem der vorangehenden Ansprüche, **dadurch gekennzeichnet, dass** der Behälterabschnitt einen dichten oberen Deckel sowie eine Gassammelvorrichtung umfasst.

12. Behandlungsmodul (100) nach einem der vorangehenden Ansprüche, **dadurch gekennzeichnet, dass** der Behälterabschnitt (110a, 110b) eine Höhe unter 3,05 m, beispielsweise von 2 m bis 3 m, aufweist.

13. System zur Behandlung von flüssigem Ausfluss, das mindestens ein Behandlungsmodul (100) nach einem der vorangehenden Ansprüche sowie motorisierte Vorrichtungen zur Versorgung mit Ausflüssen und zum Einleiten von Luft aufweist.

14. Verfahren zur Behandlung flüssiger Ausflüsse, das ein Behandlungsmodul nach einem der Ansprüche 1 bis 12 verwendet, wobei das Verfahren die Schritte umfasst, die bestehen aus dem:
- Vorsehen einer Vielzahl von Einsatzelementen, die ein biologisches Material empfangen, in einem Behälterabschnitt (110a, 110b),
- Versorgen des Behälterabschnitts (110a, 110b) mit zu behandelnden flüssigen Ausflüssen durch die Versorgung mit Ausflüssen,
- Einleiten von Luft durch das Rohr zum Einleiten von Luft (120), so dass die flüssigen Ausflüsse in eine Spiralbewegung versetzt werden,
- Sammeln der behandelten Ausflüsse durch das Rohr zum Sammeln der behandelten Ausflüsse (130), das im zentralen Teil des Behälterabschnitts (110a, 110b) eingerichtet ist.

## Claims

1. A liquid effluent treatment module (100) comprising at least one tank portion (110a, 110b) adapted to accommodate a plurality of packing elements in suspension capable of accommodating a biological material, the tank portion (110a, 110b) defining a horizontal longitudinal axis and comprising at least one effluent supply,
the tank portion (110a, 110b) further comprising:
• at least one treated effluent collection ramp (130) arranged in a central part of the tank portion and parallel to the horizontal longitudinal axis,
• at least one air injection ramp (120) arranged in a lower part (112) of the tank portion, eccentrically and parallel to the treated effluent collection ramp (130),
so as to cause a spiral movement of the liquid effluents,
**characterized in that** the at least one effluent supply comprises at least one effluent supply ramp (140) parallel and eccentric relative to the treated effluent collection ramp (130).

2. The treatment module (100) according to the preceding claim, **characterized in that** the effluent supply ramp (140) is arranged in an upper part (111) of the tank portion (110a, 110b).

3. The treatment module (100) according to the preceding claim, **characterized in that** the effluent supply ramp (140) is arranged in an eccentric manner relative to the air injection ramp (120).

4. The treatment module (100) according to any of claims 1 to 3, **characterized in that** the air injection ramp, the effluent collection ramp and the effluent supply ramp are located from bottom to top on a diagonal plane of the tank portion (110a, 110b).

5. The treatment module (100) according to any of claims 1 to 4, **characterized in that** the treated effluent collection ramp (130) is arranged halfway between the air injection ramp (120) and the effluent supply ramp (140).

6. The treatment module (100) according to any of the preceding claims, **characterized in that** the tank portion (110a, 110b) comprises a lower part (112) of curved or beveled section.

7. The treatment module (100) according to the preceding claim, wherein the lower part (112) comprises a generatrix parallel to the horizontal longitudinal axis of the tank portion (110a, 110b).

8. The treatment module (100) according to any one of the preceding claims, **characterized in that** the tank portion (110a, 110b) comprises a bottom (112a) and **in that** the air injection ramp (120) is arranged on this bottom (112a).

9. The treatment module (100) according to any one of the preceding claims, **characterized in that** the tank portion (110a, 110b) comprises a plurality of packing elements as well as liquid effluents, **characterized in that** the air injection ramp (120) and the treated effluent collection ramp (130) are arranged to allow only the spiral movement of the liquid effluents.

10. The treatment module (100) according to any one of the preceding claims, wherein a tank (110) is formed by two tank portions (110a, 110b) separated by a vertical plane of symmetry and comprises the at least one air injection ramp (120) disposed in the vertical plane of symmetry.

11. The treatment module according to any one of the preceding claims, **characterized in that** the tank portion comprises a sealed top cover as well as a gas collection device.

12. The treatment module (100) according to any one of the preceding claims, **characterized in that** the tank portion (110a, 110b) has a height of less than 3.05 m, for example from 2 m to 3 m.

13. A liquid effluent treatment system comprising at least one treatment module (100) according to any one of the preceding claims as well as motorized effluent supply and air injection devices.

14. A liquid effluent treatment method using a treatment module according to any of claims 1 to 12, said method comprising the steps consisting of:
- providing a plurality of packing elements accommodating a biological material in a tank portion (110a, 110b),
- supplying the tank portion (110a, 110b) with liquid effluents to be treated by the effluent supply,
- injecting air through the air injection ramp (120) so as to create a movement of the liquid effluents in the form of a spiral,
- collecting the treated effluents by the treated effluent collection ramp (130), arranged in the central part of the tank portion (110a, 110b).
